# EUROPEAN PATENT APPLICATION

(11) **EP 1 965 116 A1**
(43) Date of publication of application: **03.09.2008**
(21) Application number: 08152185.8
(22) Date of filing: 29.02.2008
(51) Int. Cl.: F16L 3/233

(54) **Collar for the support and retention of objects, in particular for the support and retention of combustible gas tanks**

(30) Priority: 02.03.2007 IT TO20070159
(71) Applicant: Fiat Group Automobiles S.p.A., 10135 Torino (TO) (IT)
(72) Inventor: Tosco, Franco, 10135 Torino (IT); Costantino, Massimo, 10135 Torino (IT)
(74) Representative: Jorio, Paolo

(57) **Abstract**

A collar (1) for the support and retention of objects, in particular for the support and retention of combustible gas tanks, has a plurality of strands (4) which are covered at least partly by a plastic or rubber covering (6), a surface (6a) of which defines a support for an object around which the collar (1) is wound; the ends of the strands (4) are secured to two attachment bodies (2), which can be connected to one another in order to clamp the strands (4) around the object; in order to distribute the loads, a sheet (5) is interposed between the strands (4) and the covering (6) for at least part of the length of the strands (4).

## Description

The present invention relates to a collar for the support and retention of objects, in particular for the support and retention of combustible gas tanks.

As is known, combustible gas tanks are connected to a support frame by means of metal straps, each of which is wound around the tank, through a pair of slots defined by the support frame, and has its ends joined to one another by means of a pin or another device, and is covered with plastic or rubber placed in contact with the tank. The above-described known solutions are unsatisfactory, since the flexibility of the metal bands is limited. In fact, the low flexibility makes it necessary to use a resilient system to compensate for thermal expansions and play, and optionally a hinge which is disposed in an intermediate area of the strap. In particular, the resilient recovery system is normally defined by a pre-loaded spring which is associated with the device which connects the ends of the metal strap to one another, and creates the tension of these ends in relation to one another.

However, the above-described known recovery systems are heavy and cumbersome, and require relatively lengthy times for assembly, such that the need has been felt to simplify the system for support and retention of the tank.

The object of the present invention is to provide a collar for the support and retention of objects, in particular for the support and retention of combustible gas tanks, which makes it possible to solve the above-described problems simply and economically.

According to the present invention, a collar is provided for the support and retention of objects, in particular for the support and retention of combustible gas tanks; the collar comprising:
- an elongate unit which can be wound around an object to be supported and retained;
- two end portions which can be connected to one another in order to clamp the said elongate unit around the said object;
- a covering which is disposed along at least part of the said elongate unit, and has a surface which defines a support for the said object;
characterised in that the said elongate unit comprises a plurality of strands, and the said end portions are defined by respective attachment bodies which are secured to the ends of the said strands.

Preferably, the said covering is made of rubber or plastic, whereas the said elongate unit comprises a sheet which is interposed between the said strands and the said covering for at least part of the length of the said strands.

The invention will now be described with reference to the attached drawings, which illustrate a non-limiting embodiment of it, in which:
- figure 1 shows in perspective a preferred embodiment of the collar for the support and retention of objects, in particular for the support and retention of combustible gas tanks, according to the present invention;
- figures 2 and 3 are cross-sections, on an enlarged scale, according to the lines II-II and III-III in figure 1; and
- figure 4 is a perspective view, with parts removed for the sake of clarity, of the detail of the collar shown in figure 3.

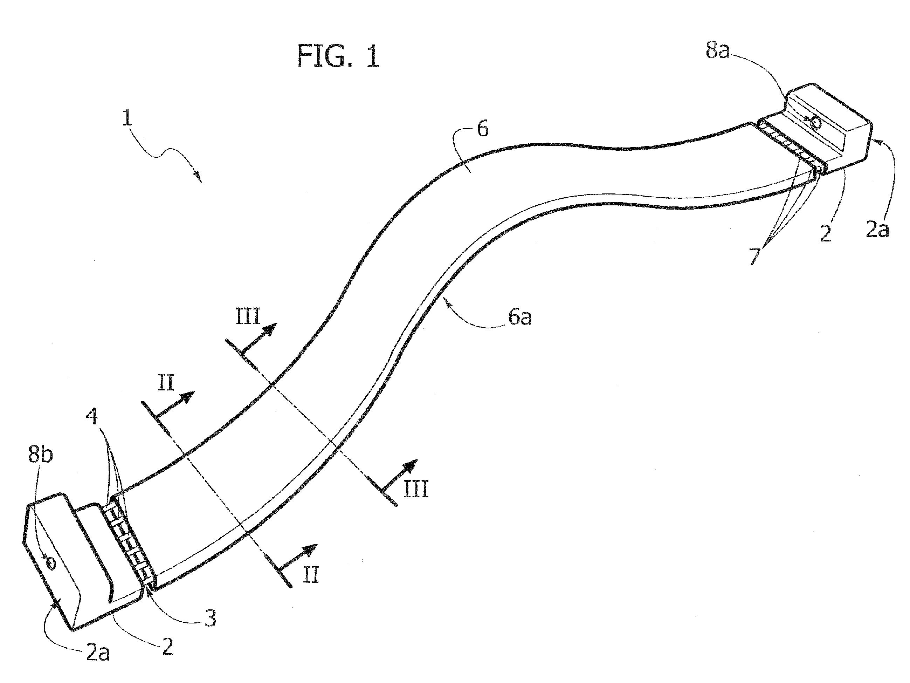

With reference to figure 1, 1 indicates a collar for the support and retention of objects, in particular for the support and retention of combustible gas tanks.

The collar 1 comprises two attachment bodies 2 which are normally known as "butts", and an elongate unit 3, which, in use, surrounds the object to be retained and supported, and is flexible in order to adapt to the form of this object and to the form of the support frame or structure to which this object is connected. The butts 2 have a form such as to be able to be secured to one another, and thus to clamp the elongate unit 3 on the object to be retained. In particular, the butts 2 have respective front surfaces 2a which can be disposed in positions facing one another, in a manner which is not illustrated, and define respective holes 8a, 8b which extend through the surfaces 2a, and are disposed in positions such as to be aligned with one another for passage of a clamping pin or screw (not illustrated). Preferably, the hole 8a is threaded for screwing of the said screw, whereas the hole 8b has an intake (not illustrated) which is splayed in the form of a cone, in order to define a means for assisting the intake of the screw, and to compensate for any differences of alignment between the two holes 8a, 8b during the fitting of the collar 1 onto the object to be retained, and the approach to one another of the butts 2.

The elongate unit 3 is covered with a sheath 6, which is made of thermo-formable plastics material, and has a surface 6a which defines a support against the object to be retained. In particular, the sheath 6 surrounds the elongate unit 3 on all sides, and acts as an interface with the object to be supported and retained, thus guaranteeing the presence of a cushion of non-metal material between the elongate unit 3 and this object.

The elongate unit 3 comprises a plurality of strands 4, the ends of which engage in respective holes 7 provided in the butts 2, and are secured in these holes 7 in a manner which is known and not illustrated. The strands 4 are substantially parallel and spaced from one another, for example they have a diameter of approximately 3 mm, they consist of wires made of steel for springs and are coiled in a spiral, and have a length which is established on the basis of the dimensions of the object to be retained.

The diameter of the strands 4 and the number of the wires which constitute each strand 4 are determined on the basis of the conditions of strength and resilience required according to the object to be retained and the conditions of use. In other words, by varying the diameter of the strands 4 and the number of the wires of each strand 4, it is possible to vary the resilience and tensile strength of the elongate unit 3.

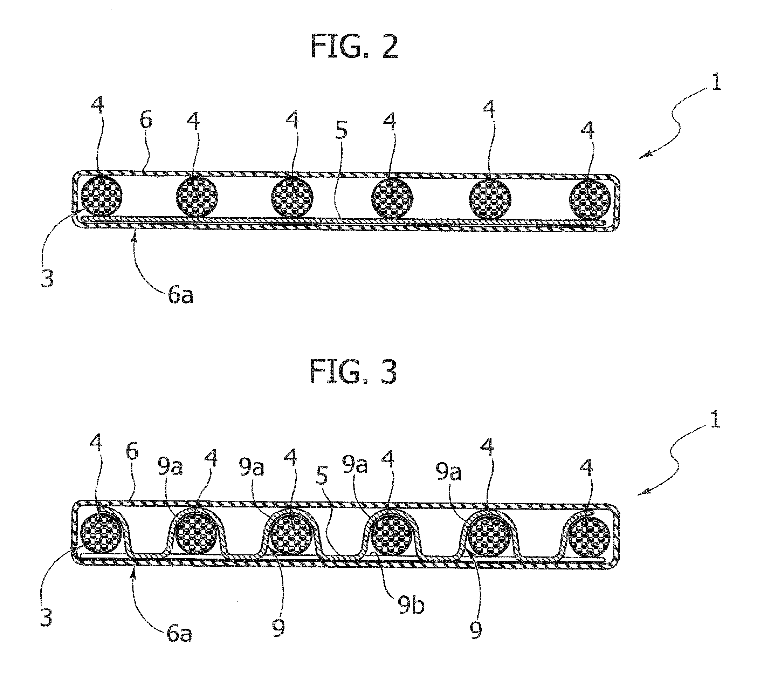

With reference to figure 2, along the side which faces the surface 6a, the strands 4 are covered with a flexible sheet 5, which is more rigid than the sheath 6, it preferably consists of a metal sheet, it is interposed between the strands 4 and the sheath 6, and extends continuously between the butts 2. According to a variant, not illustrated, the sheet 5 extends beyond the strands 4, and also extends along the butts 2.

The rigidity of the sheet 5 guarantees a regular support and correct distribution of the loads applied by the strands 4 on the object to be retained. In other words, use of the sheet 5 prevents incisions in the sheath 6, as well as concentrated loads on the object to be retained. These concentrated loads would be present in the absence of the sheet 5, because of the slightness of the contact surface between the strands 4 alone and the soft material of the sheath 6.

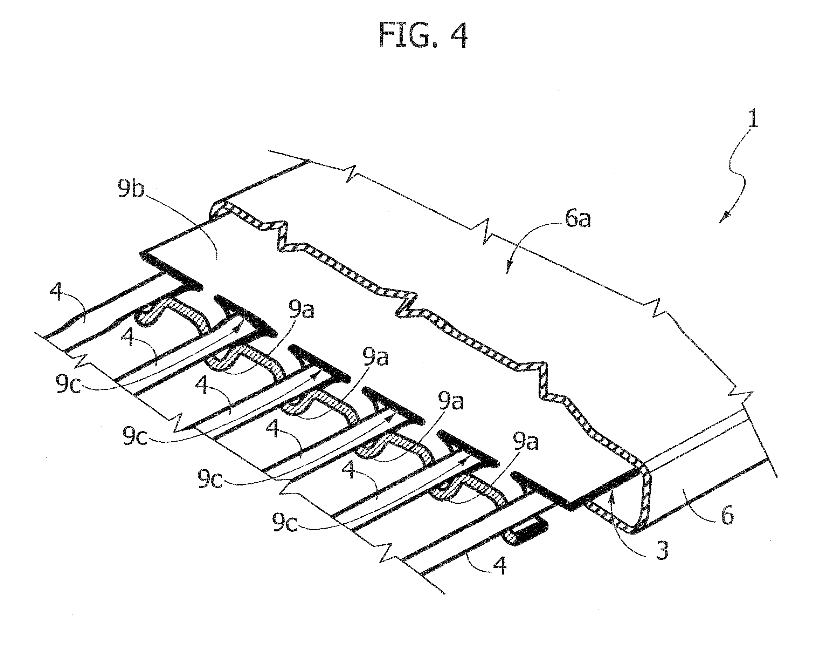

With reference to figures 3 and 4, in some areas which are distributed along the longitudinal direction of the elongate unit 3, the sheet 5 contains respective rows of seats 9, each of which is engaged by a corresponding strand 4. The seats 9 keep the paths of the strands 4 spaced in a transverse direction, and guide the strands 4 along the longitudinal direction. The seats 9 are defined by concave walls 9a, which have a length of a few millimetres in a longitudinal direction, constitute part of the sheet 5, and are produced by blanking and deforming permanently locally a flat sheet from which the sheet 5 is produced. Thus, between the walls 9a and the part 9b of the sheet 5 which has not been deformed, there remain cuts or apertures 9c which then define the passages in which the strands 4 are inserted.

In use, the strands 4 provide the collar 1 with an effect of resilience in a longitudinal direction, such as to permit the elimination of additional resilient systems to compensate for the play and thermal expansions.

It is apparent that the collar 1 is easy to handle and has a restricted weight, since the introduction of the strands 4 eliminates the need to insert springs to compensate for the play and thermal expansions, and also eliminates the need for any hinge systems along the elongate unit 3.

The strands 4 can be adapted to the form of the object to be supported and retained, in any condition and type of use, since they are flexible, and at the same time guarantee the necessary strength.

The operations for fitting of the collar 1 around the object to be supported and retained are simplified, and require less working time than the known solutions, since the weight of the collar 1 is restricted, and because of the absence of additional resilient elements to be connected and subjected to stress.

Finally, from the foregoing description, it is apparent that modifications and variations may be made to the collar 1 described, which do not depart from the field of protection of the present invention as defined in the attached claims.

In particular, the plastic or rubber material which defines the covering of the elongate unit 3 could be applied only on the predefined side of the surface 6a, and/or it could be secured directly to the sheet 5, and/or it could be discontinuous along the longitudinal direction.

The sheet 5 could be made of different material, but always designed to distribute the loads exerted by the strands 4. For example, instead of having a sheath 6 and a sheet 5 which are distinct from one another, it would be possible to provide a single element made from a material such as to define both the support and interface cushion, and the sheet for distribution of the loads.

Finally, the strands 4 could be worked and/or treated thermally in comparison with the strands which are commonly available commercially, in order to define some localised areas of greater resilience.

## Claims

1. Collar (1) for the support and retention of objects, in particular for the support and retention of combustible gas tanks; the collar comprising:
- an elongate unit (3) which can be wound around an object to be supported and retained;
- two end portions (2) which can be connected to one another in order to clamp the said elongate unit (3) around the said object;
- a covering (6) which is disposed along at least part of the said elongate unit (3), and has a surface which defines a support (6a) for the said object;
**characterised in that** the said elongate unit (3) comprises a plurality of strands (4), and the said end portions are defined by respective attachment bodies (2) which are directly secured to the ends of the said strands (4).

2. Collar according to claim 1, **characterised in that** the said covering (6) is made of rubber or plastic, and the said elongate unit (3) comprises a sheet (5) which is interposed between the said strands (4) and the said covering (6) for at least part of the length of the said strands (4).

3. Collar according to claim 1 or claim 2, **characterised in that** the said strands (4) are parallel and spaced from one another.

4. Collar according to any one of the preceding claims, **characterised in that** the said strands (4) consist of wires made of steel for springs.

5. Collar according to any one of the preceding claims, **characterised in that** the said elongate unit (3) comprises a plurality of positioning seats (9), each of which is engaged by a corresponding strand (4) in order to keep the said strands (4) spaced from one another.

6. Collar according to claims 2 and 5, **characterised in that** the said positioning seats (9) are produced integrally with the said sheet (5).

7. Collar according to claim 2 or claim 6, **characterised in that** the said sheet (5) is defined by a metal sheet.

8. Collar according to claims 2, 6 or 7, **characterised in that** the said sheet (5) extends continuously from one to the other of the said attachment bodies (2).

9. Collar according to claim 8, **characterised in that** the said sheet (5) and the said covering (6) also extend along the said attachment bodies (2).

10. Collar according to any one of the preceding claims, **characterised in that** the said attachment bodies (2) have respective front surfaces (2a) which can be disposed in positions facing one another, and define respective holes (8), which extend through the said front surfaces (2a) and are disposed in positions such as to be aligned with one another for the passage of a clamping element.
